# EUROPÄISCHE PATENTSCHRIFT

(11) **EP 2 639 114 B1**
(45) Veröffentlichungstag und Bekanntmachung des Hinweises auf die Patenterteilung: **31.12.2014**
(21) Anmeldenummer: 13155076.6
(22) Anmeldetag: 13.02.2013
(51) Int. Cl.: B60R 19/34

(54) **Vorrichtung mit einstellbarer Steifigkeit zum Aufnehmen einer Aufprallenergie und Verfahren zum Einstellen einer derartigen Vorrichtung**
Device with adjustable rigidity for absorbing impact energy and method for adjusting such a device
Dispositif ayant une raideur réglable pour la réception d'une énergie de choc et procédé de réglage d'un tel dispositif

(30) Priorität: 15.03.2012 DE 102012204045
(43) Veröffentlichungstag der Anmeldung: 18.09.2013
(73) Patentinhaber: ROBERT BOSCH GMBH, 70442 Stuttgart (DE)
(72) Erfinder: Friedrich, Thomas, 71691 Freiberg A. N. (DE); Lich, Thomas, 71409 Schwaikheim (DE); Kieffer, Sebastien, 71292 Friolzheim (DE)

(56) Entgegenhaltungen:
- DE-A1-102009 044 966
- DE-A1-102011 006 069

## Beschreibung

### Stand der Technik

Die vorliegende Erfindung bezieht sich auf eine Vorrichtung mit einstellbarer Steifigkeit zum Aufnehmen einer Aufprallenergie und ein Verfahren zum Einstellen einer Vorrichtung mit einstellbarer Steifigkeit zum Aufnehmen einer Aufprallenergie. Eine derartige Vorrichtung kann beispielsweise in einem Fahrzeug eingesetzt werden.

Zum Schutz von Fahrzeuginsassen bei Kollisionen kommen immer häufiger adaptive Crashstrukturen bzw. Aufprallstrukturen zum Einsatz. Eine entsprechende Struktur soll die herkömmliche Crashbox und den vorderen Teil der Längsträger ersetzen. Daher sollten auch beide Funktionalitäten abgebildet und somit zumindest zwei Steifigkeiten einstellbar sein.

Die EP 1 792 786 A2 zeigt eine Crashbox zur Eingliederung zwischen einem Stoßfängerquerträger und einem Fahrzeuglängsträger eines Kraftfahrzeugs. Die Crashbox weist ein gehäuseartiges Deformationsprofil als Faltkonstruktion aus Metallblech und eine längsträgerseitige Flanschplatte auf.

Aus der EP 1 486 697 A1 ist eine pyrotechnische Dämpfung bekannt. Die in einer Kammer eingeschlossenen pyrotechnischen Module sind sowohl in der Energie als auch im zeitlichen Zündverlauf variabel. Somit kann die Dämpfung adaptiv gestaltet werden.

Die De 10 2009 044 966 A1 offenbart eine Vorrichtung und ein Verfahren zu, adaptiven Abbau von Crashenergie gemäß dem Oberbegriff des Anspruchs 1.

### Offenbarung der Erfindung

Vor diesem Hintergrund werden mit der vorliegenden Erfindung eine Vorrichtung mit einstellbarer Steifigkeit zum Aufnehmen einer Aufprallenergie und ein Verfahren zum Einstellen einer Vorrichtung mit einstellbarer Steifigkeit zum Aufnehmen einer Aufprallenergie gemäß den Hauptansprüchen vorgestellt. Vorteilhafte Ausgestaltungen ergeben sich aus den jeweiligen Unteransprüchen und der nachfolgenden Beschreibung.

Eine adaptive Crashstruktur kann auf Basis eines Verjüngungsabsorbers arbeiten. Hier wird bei einer Kollision ein Deformationselement, z. B. ein Rohr, durch eine oder mehrere in einem Gehäuse angeordnete Matrizen geschoben und dabei verformt bzw. verjüngt, um so die Aufprallenergie wirkungsvoll abzubauen. Durch eine wirksame Zu- und Abschaltung von Matrizenplatten kann der Verjüngungsdurchmesser variiert und somit die Steifigkeit der Crashstruktur angepasst werden. Beispielsweise kann eine für eine zweite Verjüngungsstufe der Struktur verwendete Matrize ausrückbar sein, d. h., bei Wegnahme einer Abstützung durch eine Radialkraft des Deformationselements nach außen gedrückt werden. Die Verjüngungskraft der Crashstruktur ist dann niedriger und es wird weniger Aufprallenergie abgebaut. Die Abstützung kann beispielsweise in Form eines Ringes vorliegen, der aus einer Position, in der er die ausrückbare Matrize abstützt, herausbewegt werden kann, um die Crashstruktur von der hohen in die niedrige Steifigkeit umzuschalten.

Mit dem hier vorgestellten Ansatz kann eine Druckaktuatorik - beispielsweise eine pyrotechnische Aktuatorik - für adaptive Crashstrukturen realisiert werden, die eine zuverlässige Bewegung einer ringförmigen Abstützung der ausrückbaren Matrize unter Verwendung lediglich eines einzigen Druckerzeugungselements wie z. B. einer Zündpille gewährleisten kann.

Gemäß dem hierin vorgestellten Konzept einer adaptiven Crashstruktur kann z. B. ein pyrotechnischer Aktuator so konstruiert und realisiert werden, dass unter Einsatz einer einzigen Zündpille oder eines vergleichbaren Druckerzeugungselements eine flächige Druckbelastung auf den Sperrring ausgeübt werden kann. Es kann also bei Verwendung lediglich einer einzigen Zündpille ein homogener Druckaufbau stattfinden, sodass der Ring bzw. die Abstützeinrichtung ohne Verkanten den ganzen Stellweg zurücklegen kann.

Ein bedeutender Vorteil dieser Erfindung, insbesondere gegenüber einer Variante mit mehreren Zündpillen, besteht in der Möglichkeit der Kostenreduzierung. Neben dem Kostenvorteil durch die geringere Anzahl an Zündpillen reduzieren sich auch die Kosten seitens der Fahrzeughersteller, da die Verkabelung an das Steuergerät auch mit der Anzahl der Zündpillen abnimmt. Ebenso ist eine geringere Anzahl an Zündkreisen im Airbagsteuergerät notwendig. Da im Fahrzeug im Allgemeinen zwei adaptive Crashstrukturen verbaut sind, fallen diese Einsparpotenziale relativ groß aus.

Die vorliegende Erfindung schafft eine Vorrichtung mit einstellbarer Steifigkeit zum Aufnehmen einer Aufprallenergie, wobei die Vorrichtung ein Gehäuse mit einer in dem Gehäuse angeordneten ausrückbaren Matrize zum Aufnehmen und Deformieren eines Deformationselements bei einer Bewegung des Deformationselements in einer durch die Aufprallenergie bedingten Vorschubrichtung aufweist, und wobei die Vorrichtung die folgenden Merkmale aufweist:
eine in dem Gehäuse angeordnete Abstützeinrichtung, die ausgebildet ist, um in einer ersten Position die ausrückbare Matrize gegenüber einer in einer Querrichtung zu der Vorschubrichtung wirkenden Radialkraft des Deformationselements abzustützen und in einer zweiten Position die ausrückbare Matrize für eine Bewegung zum Ausrücken durch die Radialkraft freizugeben; und
einen in dem Gehäuse der Abstützeinrichtung in der Vorschubrichtung vorgelagert angeordneten Druckraum mit einer Druckverteilungsstruktur, die ausgebildet ist, um eine von einer Druckerzeugungseinrichtung erzeugte Druckwelle in dem Druckraum zu leiten, um die Steifigkeit einzustellen, insbesondere um die Abstützeinrichtung aus der ersten Position in die zweite Position zu bewegen und so ein Niveau der Steifigkeit der Vorrichtung abzusenken.

Die Vorrichtung kann in einem Fahrzeug zum Schutz der Insassen bei einer Kollision des Fahrzeugs mit einem stationären Objekt oder einem beweglichen Objekt, wie beispielsweise einem weiteren Fahrzeug, installiert sein. Bei der Vorrichtung kann es sich um eine adaptive Crashstruktur wie z. B. einen Verjüngungsabsorber handeln. Der Verjüngungsabsorber basiert auf dem Prinzip einer Verformung, hier Verjüngung, des Deformationselements zum Aufnehmen und Abbauen der Aufprallenergie im Kollisionsfall. Die Steifigkeit kann dabei in Abhängigkeit von einer ermittelten Schwere der Kollision zwischen hoch und niedrig eingestellt sein. Entsprechend kann bei einer schweren Kollision und hoher eingestellter Steifigkeit eine umfangreiche Verformung des Deformationselements erfolgen, um eine hohe Aufprallenergie abzubauen. Bei einer leichten Kollision kann bei niedriger eingestellter Steifigkeit die Verformung des Deformationselements gering sein, da weniger Aufprallenergie absorbiert werden muss. Die Vorrichtung kann in einem Vorderwagen und/oder in einem Heck des Fahrzeugs angeordnet sein.

Das Deformationselement kann als ein längliches Bauteil mit z. B. rundem Querschnitt ausgebildet sein. Das Deformationselement kann an einem dem Gehäuse zugewandten Ende eine Verjüngung aufweisen. Ansprechend auf die Kollision kann das Deformationselement in der Vorschubrichtung entlang seiner Längsachse durch das Gehäuse bewegt und dabei durch die ausrückbare Matrize aufgenommen und deformiert bzw. verjüngt werden, um die Aufprallenergie zu absorbieren. Das Gehäuse kann z. B. in Richtung einer Längserstreckung des Deformationselements angeordnet sein und z. B. in einer Ruhestellung der Vorrichtung lediglich einen zum Fahrzeuginneren ausgerichteten Endbereich des Deformationselements umfassen. Das Gehäuse kann eine erste Öffnung zum Aufnehmen des Deformationselements in das Gehäuse und eine der ersten Öffnung gegenüberliegende zweite Öffnung für einen Austritt des Deformationselements aus dem Gehäuse aufweisen. Das Gehäuse kann das Deformationselement oder Teile desselben bei der Bewegung des Deformationselements durch das Gehäuse vollumfänglich umschließen. Für die Unterbringung der ausrückbaren Matrize, der Abstützeinrichtung und des Druckraums im Inneren des Gehäuses kann das Gehäuse eine Auswölbung aufweisen. Die Vorschubrichtung kann einer Fahrtrichtung des Fahrzeugs entgegengerichtet sein. Die Vorschubrichtung kann im Wesentlichen einer Aufprallrichtung auf das Fahrzeug entsprechen.

Die ausrückbare Matrize kann ausgebildet sein, um beim Eindringen des Deformationselements auszurücken, wenn die Vorrichtung nicht auf die hohe Steifigkeit eingestellt ist. In einer Ruhestellung der Vorrichtung kann die ausrückbare Matrize z. B. einen Ring bilden, dessen lichtes Maß geringer als ein maximaler Durchmesser des Deformationselements ist. Die ausrückbare Matrize kann zum kontrollierten Ausrücken Sollbruchstellen aufweisen. Die ausrückbare Matrize kann so in dem Gehäuse angeordnet sein, dass eine Außenwand der ausrückbaren Matrize von einer Innenwand des Gehäuses beabstandet ist. Beim Ausrücken kann die ausrückbare Matrize z. B. an den Sollbruchstellen brechen und durch die Radialkraft des eindringenden Deformationselements von dem Deformationselement weggedrückt, also zu der Innenwand des Gehäuses hingedrückt werden und somit keine Verjüngung des Deformationselements bewirken. Eine solche Bewegung der ausrückbaren Matrize, die im Wesentlichen quer zur Vorschubrichtung erfolgt, wird in der vorliegenden Beschreibung als "Ausrücken" der Matrize bezeichnet. Die Innenseite der ausrückbaren Matrize kann beispielsweise ganz oder teilweise schräg verlaufen, sodass die ausrückbare Matrize eine Art Trichter bildet, der bei hoher eingestellter Steifigkeit der Vorrichtung zu der Verjüngung des Deformationselements führen kann, während sich dieses aufgrund der Kollision an der Innenseite der ausrückbaren Matrize entlang bewegt.

Die Abstützeinrichtung kann ein- oder mehrstückig sein und in der ersten Position zwischen der Außenwand der ausrückbaren Matrize und der Innenwand des Gehäuses angeordnet sein. Sie kann aus einem Material gebildet sein, das eine ausreichende Festigkeit aufweist, um in der ersten Position die ausrückbare Matrize so gegenüber der Radialkraft des sich entlang der Innenseite der ausrückbaren Matrize bewegenden Deformationselements abzustützen, dass das Deformationselement durch die ausrückbare Matrize verjüngt werden kann. Die Abstützeinrichtung kann in der Vorschubrichtung aus der ersten Position in die zweite Position und entgegen der Vorschubrichtung aus der zweiten Position in die erste Position bewegt werden. In der ersten Position kann die Abstützeinrichtung vollständig mit einer Seitenwand an der Innenwand des Gehäuses und mit einer gegenüberliegenden Seitenwand an der ausrückbaren Matrize anliegen. In der zweiten Position kann die Abstützeinrichtung vollständig aus einer Ausrückbahn der ausrückbaren Matrize entfernt angeordnet sein. Die Abstützeinrichtung kann so ausgebildet sein, dass sie in einer Ruhe- bzw. Grundstellung der Vorrichtung die ausrückbare Matrize vollständig umgibt. Die Abstützeinrichtung kann beispielsweise in der Ruhestellung über ein Federelement in der ersten Position fixiert sein.

Der Druckraum kann in der Ruhestellung der Vorrichtung in der Vorschubrichtung durch einen Teil der Innenwand des Gehäuses und eine vordere Seitenwand der Abstützeinrichtung sowie parallel zu der Vorschubrichtung durch zwei gegenüberliegende Seitenwände begrenzt sein. Der Druckraum kann ausgebildet sein, um bei einer Aktivierung der Vorrichtung die in der Druckerzeugungseinrichtung erzeugte Druckwelle aufzunehmen und auf die Abstützeinrichtung zu richten, um diese aus der ersten Position in die zweite Position zu bewegen. Bei der Druckverteilungsstruktur kann es sich um ein innerhalb des Druckraumes angeordnetes Bauteil oder um eine spezifische Ausprägung der den Druckraum begrenzenden Elemente der Vorrichtung handeln. Die Druckverteilungsstruktur kann ausgebildet sein, um die Druckwelle so zu beeinflussen, dass ihre Druckkraft auf die Abstützeinrichtung über eine Gesamtfläche der Abstützeinrichtung hinweg im Wesentlichen gleich ist. Die Druckerzeugungseinrichtung kann innerhalb des Druckraums angeordnet sein oder mit dem Druckraum gekoppelt sein. Die Druckerzeugungseinrichtung kann ausgebildet sein, um an einem vorbestimmten Ort innerhalb des Druckraums die Druckwelle, beispielsweise eine Luftdruckwelle, zu erzeugen.

Gemäß einer Ausführungsform kann die Abstützeinrichtung als ein Ring ausgebildet sein, dessen Öffnungsdurchmesser größer als ein Außenumfang der ausrückbaren Matrize ist. Beispielsweise kann die Abstützeinrichtung in der ersten Position die ausrückbare Matrize vollumfänglich umgeben, sodass eine Auβenseite der ausrückbaren Matrize eine Innenfläche der ringförmigen Abstützeinrichtung kontaktiert. So kann vorteilhafterweise in der ersten Position der Abstützeinrichtung eine nach allen Seiten gleichmäßige Abstützung der ausrückbaren Matrize gewährleistet werden. Entsprechend kann eine Deformation des Deformationselements bei hoher eingestellter Steifigkeit der Vorrichtung optimal und mit einem Maximum an Energieabsorption ablaufen.

Gemäß einer weiteren Ausführungsform kann die Druckerzeugungseinrichtung als ein in dem Druckraum angeordneter pyrotechnischer Aktuator ausgebildet sein. Der pyrotechnische Aktuator kann eine Zündpille zum Erzeugen der Druckwelle aufweisen. Der pyrotechnische Aktuator kann ausgebildet sein, um ansprechend auf ein Signal eines Steuergeräts der Vorrichtung durch Zünden der Zündpille eine Druckwelle zu erzeugen, die ausreichend stark ist, um die Abstützeinrichtung beispielsweise entgegen einer Federkraft in die zweite Position zu bewegen, um so die ausrückbare Matrize zum Ausrücken durch das Deformationselement freizugeben. Entsprechend kann so die Steifigkeit der Vorrichtung herabgesetzt werden. Bei der Zündpille kann es sich um ein elektrisch zündbares Anzündmittel handeln, das mittels eines Signals, beispielsweise von dem Steuergerät, aktiviert werden kann. Die Zündpille kann hier nicht zum Entzünden eines Brandmittels, sondern lediglich zum Erzeugen der Druckwelle eingesetzt werden, die ausreichend ist, um die Abstützeinrichtung aus der ersten Position in die zweite Position zu "schießen". Die Verwendung des pyrotechnischen Aktuators, insbesondere in Verbindung mit der Zündpille, bietet den Vorteil einer besonders kurzen Ansprechzeit zum Einstellen der Steifigkeit der Vorrichtung, da sich die hier vorgeschlagene Konstruktion direkt am Einsatzort befindet und mithilfe der durch die Zündpille erzeugten Druckwelle die Abstützeinrichtung sehr schnell aus der ersten in die zweite Position bewegt werden kann.

Insbesondere kann die Druckverteilungsstruktur als eine den Druckraum in eine in der Vorschubrichtung erste Druckkammer und eine in der Vorschubrichtung zweite Druckkammer unterteilende Blende ausgebildet sein. Beispielsweise kann die Blende ringförmig ausgebildet sein und mindestens eine Öffnung zum vorbestimmten Führen der Druckwelle aus der ersten Druckkammer in die zweite Druckkammer aufweisen. Dabei kann die Druckerzeugungseinrichtung in der ersten Druckkammer angeordnet oder mit dieser verbunden sein. Beispielsweise kann die Blende eine Mehrzahl von Öffnungen unterschiedlicher Größe aufweisen, wobei die Öffnungen mit steigender Größe weiter von der Druckerzeugungseinrichtung entfernt angeordnet sein können. Beispielsweise können die Öffnungen in Bezug auf die Position der Druckerzeugungseinrichtung spiegelbildlich in der der Blende angeordnet sein. Alternativ kann die Blende auch an einer Seite offen sein oder sich aus voneinander beabstandeten Teilstücken zusammensetzen. Mit dieser Ausführungsform kann auf einfache Weise eine gleichmäβige Verteilung der Druckwelle in dem Druckraum erzielt und somit ein Verkanten der Abstützeinrichtung bei der Bewegung aus der ersten in die zweite Position verhindert werden.

Ferner kann die Druckverteilungsstruktur als mindestens eine mit dem Druckraum verbundene Druckauslassöffnung zum teilweisen Ableiten der Druckwelle aus dem Druckraum ausgebildet sein. Beispielsweise kann sich die Druckauslassöffnung auf ungefährer Höhe der Druckerzeugungseinrichtung befinden. So kann ein punktuell hoher Druck an einem Entstehungsort der Druckwelle wirksam und schnell an einen geringeren Druck an der von dem Entstehungsort am weitesten entfernten Ort in dem Druckraum angepasst werden. Auch auf diese Weise kann ein Verkanten der Abstützeinrichtung bei Ihrer Bewegung in die zweite Position vorteilhaft vermieden werden, ohne dass dafür ein separates Element benötigt würde.

Beispielsweise kann die Druckauslassöffnung in der Abstützeinrichtung angeordnet sein. Die Druckauslassöffnung kann ausgebildet sein, um das teilweise Ableiten der Druckwelle aus dem Druckraum in einen der Abstützeinrichtung in der Vorschubrichtung nachgeordneten Bereich der Vorrichtung zu bewirken. Hier kann die Druckauslassöffnung in Form eines oder mehrerer Durchgangslöcher in der Abstützeinrichtung vorliegen. Diese Ausführungsform bietet den Vorteil, den Weg der Druckwelle zur Druckauslassöffnung sehr kurz gestalten zu können, wenn die Druckerzeugungseinrichtung an einer Innenwand des Gehäuses angeordnet ist, da sich die Druckauslassöffnung und die Druckerzeugungseinrichtung dann genau gegenüber einander befinden können. So kann der Druckausgleich im Druckraum möglichst schnell vonstattengehen. Entsprechend kann die Ansprechzeit der Vorrichtung vorteilhaft kurz gehalten werden.

Alternativ kann die Druckauslassöffnung in einer Wand des Gehäuses angeordnet sein. Entsprechend kann die Druckauslassöffnung ausgebildet sein, um das teilweise Ableiten der Druckwelle aus dem Druckraum in einen außerhalb der Vorrichtung gelegenen Außenbereich zu bewirken. Beispielsweise kann die Druckauslassöffnung benachbart zu der Druckerzeugungseinrichtung angeordnet sein. Auch auf diese Weise kann der Druckausgleich im Druckraum sehr schnell erfolgen.

Gemäß einer weiteren Ausführungsform kann eine der Abstützeinrichtung in der Vorschubrichtung nachgelagerte weitere Wand des Gehäuses zumindest eine Austrittsöffnung aufweisen. So kann auf einfache Weise ein sich in der ersten Position der Abstützeinrichtung in der Vorschubrichtung hinter der Abstützeinrichtung befindliches Luftvolumen mit der Bewegung in die zweite Position aus dem Gehäuse ausgestoßen werden. Dies hilft vorteilhafterweise zu vermeiden, dass die Abstützeinrichtung nach einer Aktivierung der Druckerzeugungseinrichtung unerwünschterweise aus der zweiten Position wieder in die erste Position zurückschnellt.

Günstig ist es auch, wenn die Vorrichtung eine Führung zum Führen der Abstützeinrichtung zwischen der ersten Position und der zweiten Position und Fixieren der Abstützeinrichtung in der zweiten Position aufweist. Dabei kann die Führung durch ein sich zwischen der ersten Position und der zweiten Position verringerndes lichtes Maß gekennzeichnet sein. Beispielsweise kann die Führung konisch verlaufen und/oder eine Rastnase aufweisen, die bei der Bewegung der Abstützeinrichtung in die zweite Position überfahren werden und eine Rückbewegung der Abstützeinrichtung sperren kann. Mit beiden Ausführungsformen der Führung kann auf einfache Weise sichergestellt werden, dass die Abstützeinrichtung nach Betätigung der Druckerzeugungseinrichtung in der zweiten Position fixiert bleibt. So kann ein optimales Zeitfenster zum Freigeben der ausrückbare Matrize zum Ausrücken bereitgestellt werden, wenn die Vorrichtung in der niedrigen Steifigkeit aktiviert wird.

Ferner kann die Vorrichtung eine nicht ausrückbare Matrize zum Aufnehmen und Deformieren des Deformationselements aufweisen. Die nicht ausrückbare Matrize kann der ausrückbaren Matrize in der Vorschubrichtung vorgelagert in dem Gehäuse angeordnet sein. Die nicht ausrückbare Matrize kann zur Abstützung mit einer Außenwand an einer Seitenwand des Druckraumes anliegend in dem Gehäuse angeordnet sein. Ferner kann die nicht ausrückbare Matrize durch den Aufprall unzerstörbar, also aus einem robusteren Material als das Deformationselement gebildet sein, sodass der sich bei dem Aufprall in das Gehäuse bewegende Abschnitt des Deformationselements beim Eindringen in diese Matrize verjüngt werden kann. Mit dieser Ausführungsform kann eine vorteilhafte Vorverjüngung des Deformationselements erzielt werden, über die bereits ein vorbestimmtes Maß an Aufprallenergie absorbiert werden kann, sodass die Insassen des Fahrzeugs beispielsweise auch bei niedriger eingestellter Steifigkeit der Vorrichtung wirksam vor Verletzungen geschützt werden können.

Die vorliegende Erfindung schafft ferner ein Verfahren zum Einstellen einer Steifigkeit einer Vorrichtung gemäß einer der im Vorhergehenden erläuterten Ausführungsformen, wobei das Verfahren die folgenden Schritte aufweist:
Empfangen eines Signals mit einer Information über die Aufprallenergie;
Vergleichen eines Wertes des Signals mit einem Schwellwert; und

Bereitstellen eines Aktivierungssignals an die Druckerzeugungseinrichtung zum Bewegen der Abstützeinrichtung aus der ersten Position in die zweite Position, um die Steifigkeit einzustellen, wenn der Schritt des Vergleichens ein Ergebnis liefert, dass der Wert ein vorbestimmtes Verhältnis zu dem Schwellwert aufweist.

Unter einem Einstellen der Steifigkeit kann hierbei insbesondere ein Absenken des Niveaus der Steifigkeit der Vorrichtung verstanden werden. Unter einem vorbestimmten Verhältnis, das der Wert in Bezug zum Schwellwert einnehmen kann, kann beispielsweise verstanden werden, dass der Wert größer als der Schwellwert ist, bei welchem die Druckerzeugungseinrichtung aktiviert wird.

Das Verfahren kann beispielsweise in einem Steuergerät, beispielsweise einem Steuergerät, das für die Auslösung von Rückhaltesystemen in einem Fahrzeug zuständig ist, durchführt werden. Das Steuergerät kann mit der in der Vorhergehenden erläuterten Vorrichtung verbunden oder in diese integriert sein kann. So kann gemäß einer Ausführungsform des Verfahrens der Schritt des Bereitstellens des Aktivierungssignals basierend auf einem Signal des Steuergeräts erfolgen. Es kann sich dabei z. B. um ein Signal zum Auslösen der Airbags eines Fahrzeugs, in die die Vorrichtung integriert ist, handeln.

Das Steuergerät kann ausgebildet sein, um die Schritte des erfindungsgemäßen Verfahrens in entsprechenden Einrichtungen der im Vorhergehenden erläuterten erfindungsgemäßen Vorrichtung durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter dem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Beispielsweise kann das Steuergerät die Information über die Aufprallenergie von einem Sensor, z. B. einem Beschleunigungssensor, des Fahrzeugs empfangen, der die Schwere, Position und Richtung eines sich ereignenden Aufpralls auf das Fahrzeug erfasst. Der Schritt des Vergleichens der Aufprallenergie mit dem Schwellwert kann in dem Steuergerät mittels eines geeigneten Algorithmus durchgeführt werden. Aus einem Unterschreiten bzw. Überschreiten des Schwellwerts kann auf eine Schwere der Kollision geschlossen werden. Sollte der Vergleich ergeben, dass sich eine Kollision geringer Schwere ereignet, ist eine Herabsetzung der Steifigkeit der Vorrichtung empfehlenswert. Entsprechend kann z. B. über einen Fahrzeugbus ein Aktivierungssignal bzw. Zündsignal von dem Steuergerät an die Druckerzeugungseinrichtung bereitgestellt werden. Ansprechend auf das Aktivierungssignal kann die Druckerzeugungseinrichtung die Abstützeinrichtung in der Vorschubrichtung von der ersten in die zweite Position katapultieren, um die Steifigkeit der Vorrichtung herabzusetzen. Ergibt hingegen der Schritt des Vergleichens, dass die Schwere der Kollision groß ist, so kann eine Bereitstellung des Aktivierungssignals unterdrückt werden, sodass die Abstützeinrichtung in der ersten Position verbleibt und die Vorrichtung auf die hohe Steifigkeit eingestellt bleibt, um ein hohes Maß an Aufprallenergie absorbieren zu können.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem, einem Computer entsprechenden Gerät ausgeführt wird.

Die Erfindung wird nachstehend anhand der beigefügten Zeichnungen beispielhaft näher erläutert. Es zeigen:
- Fig. 1A: ein Schnittbild einer adaptiven Crashstruktur mit pyrotechnischem Aktuator in Ruhestellung;
- Fig. 1 B: ein Schnittbild der adaptiven Crashstruktur aus Fig. 1A bei Zündung des pyrotechnischen Aktuators;
- Fig. 2: eine perspektivische Darstellung einer ausrückbaren Matrize der adaptiven Crashstruktur aus Figuren 1A und 1 B;
- Fig. 3A: ein Schnittbild einer adaptiven Crashstruktur mit pyrotechnischem Aktuator im Ruhezustand, gemäß einem Ausführungsbeispiel der vorliegenden Erfindung;
- Fig. 3B: ein Schnittbild der adaptiven Crashstruktur aus Fig. 3A bei Zündung des pyrotechnischen Aktuators;
- Fig. 3C: ein Schnittbild der adaptiven Crashstruktur aus Fig. 3A und 3B nach einer Bewegung einer Abstützeinrichtung der Crashstruktur;
- Fig. 4A bis 4C: Schnittdarstellungen einer Blende zur Teilung eines Druckraumes der adaptiven Crashstruktur aus Fig. 3A bis 3C, gemäß Ausführungsbeispielen der vorliegenden Erfindung;
- Fig. 5A: ein Schnittbild einer adaptiven Crashstruktur mit pyrotechnischem Aktuator im Ruhezustand, gemäß einem weiteren Ausführungsbeispiel der vorliegenden Erfindung;
- Fig. 5B: ein Schnittbild der adaptiven Crashstruktur aus Fig. 5A bei Zündung des pyrotechnischen Aktuators;
- Fig. 5C: ein Schnittbild der adaptiven Crashstruktur aus Fig. 5A und 5B nach einer Bewegung einer Abstützeinrichtung der Crashstruktur;
- Fig. 6: eine Schnittdarstellung einer Abstützeinrichtung mit Druckauslassöffnungen der adaptiven Crashstruktur aus Fig. 5A bis 5C, gemäß einem Ausführungsbeispiel der vorliegenden Erfindung;
- Fig. 7: eine Schnittdarstellung eines Gehäuses mit Druckauslassöffnungen der adaptiven Crashstruktur aus Fig. 5A bis 5C, gemäß einem Ausführungsbeispiel der vorliegenden Erfindung;
- Fig. 8A: ein Schnittbild einer Führung zum Führen einer Abstützeinrichtung einer adaptiven Crashstruktur, gemäß einem Ausführungsbeispiel der vorliegenden Erfindung;
- Fig. 8B: ein Schnittbild einer Führung zum Führen einer Abstützeinrichtung einer adaptiven Crashstruktur, gemäß einem weiteren Ausführungsbeispiel der vorliegenden Erfindung;
- Fig. 9: eine Prinzipdarstellung eines Fahrzeugs mit einer adaptiven Crashstruktur gemäß einem Ausführungsbeispiel der vorliegenden Erfindung; und
- Fig. 10: ein Ablaufdiagramm eines Verfahrens zum Einstellen einer Steifigkeit einer adaptiven Crashstruktur, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Eine adaptive Crashstruktur (ACS) kann auf unterschiedlichen Prinzipien basieren. So ist z. B. eine Crashstruktur mit adaptiver Energieaufnahme durch ein Entfernen von Versteifungsrippen durch Schneidearbeit oder durch Verjüngung umsetzbar. Eine adaptive Crashstruktur kann eine schnelle und genaue Aktuatorik für eine Veränderung der Steifigkeit aufweisen. Beispielsweise kann eine adaptive Crashstruktur mithilfe eines Wirbelstromaktuators oder eines hydraulischen Rings einstellbar sein. Ferner kann eine adaptive Crashstruktur ausgebildet sein, um unter Last das Kraftniveau zu senken, um den Beschleunigungspuls für den Insassen harmonischer zu gestalten. Auch ein pyrotechnischer Aktuator für eine ACS ist realisierbar.

Bei Airbags, die bekanntermaßen pyrotechnisch funktionieren, sind im pyrotechnischen Modul zwei wesentliche Elemente vorhanden. Erstens die Zündpille, die einen Stromimpuls von der Größenordnung von 1 bis 2 A vom Airbagsteuergerät bekommt und sich entzündet. Zweitens der Gasgenerator oder Treibsatz, der aufgrund der Initialzündung der Zündpille schnell abbrennt. Dies kann auch als Explosion wahrgenommen werden. Ein durch das Abbrennen des Treibsatzes verursachtes Gas füllt die Airbags binnen Millisekunden. Die Größe des Treibsatzes ist an die Airbaggröße angepasst. Ein zweistufiger Airbag umfasst sowohl zwei Zündpillen als auch zwei unterschiedlich große Treibsätze, die sequenziell gezündet werden.

Da in einer adaptiven Crashstruktur nur eine Abstützeinrichtung, die z. B. in Form eines Ringes vorliegt, um wenige Millimeter bewegt wird und somit nur ein äuβerst kleines Volumen entsteht, ist ein Treibsatz oder Gasgenerator nicht notwendig. Zum Verschieben des Rings genügt die Energie einer Zündpille.

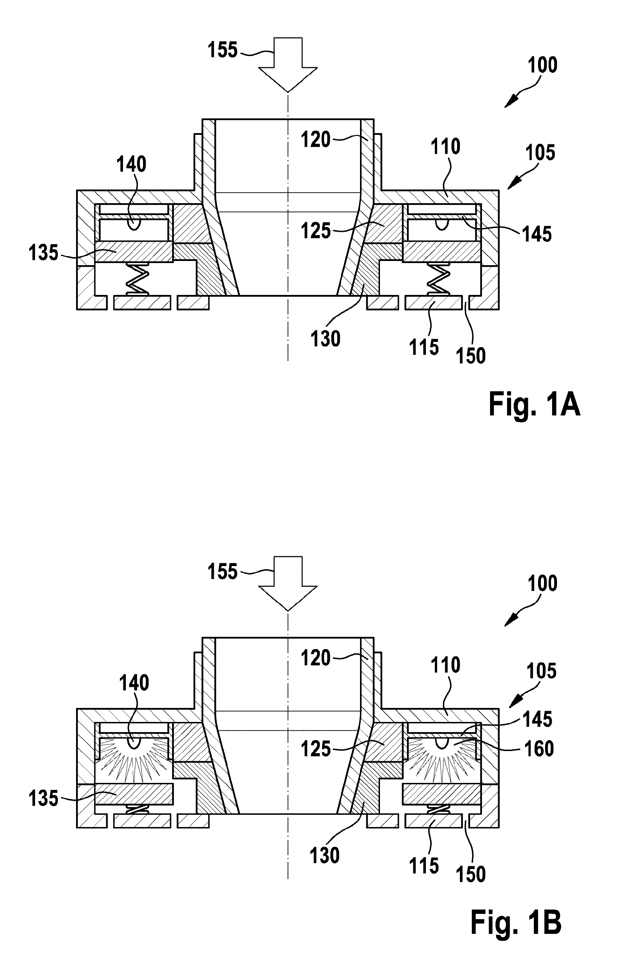

Anhand der Figuren 1A und 1B wird eine Funktionsweise einer adaptiven Crashstruktur bzw. Aufprallstruktur zum Schutz von Fahrzeuginsassen bei Kollisionen erläutert. Diese Strukturen sind konzipiert, um Teile bestehender Vorderwagenstrukturen in Kraftfahrzeugen zu ersetzen. Die adaptive Crashstruktur kann zwei unterschiedliche Steifigkeiten aufweisen. Im Falle hoher Aufprallgeschwindigkeiten und somit hoher Kollisionsenergien ist es vorteilhaft, frühzeitig ein hohes Energieabsorptionsniveau zu erreichen, weshalb standardmäßig im Allgemeinen die höhere Steifigkeit eingestellt ist, die der des vorderen Längsträgers des Fahrzeugs entspricht. Im Falle geringer Kollisionsenergien ist eine niedrigere Steifigkeit erforderlich, damit die hintere steifere Struktur nicht zu stark beansprucht wird und somit nicht kollabieren kann. Entsprechend weist die Crashstruktur in der zweiten Einstellung, auf die umgeschaltet wird, eine Steifigkeit auf, die der einer herkömmlichen Crashbox aus dem Stand der Technik entspricht. Die beiden Niveaus können mithilfe eines pyrotechnischen Aktuators eingestellt werden. Ebenfalls möglich ist es, die adaptive Crashstruktur weiter hinten in der Frontstruktur einzubauen, d. h. als Ersatz des hinteren Längsträgers.

Fig. 1A zeigt in einem Längsschnitt einen Ausschnitt aus einer adaptiven Crashstruktur 100. Das Schnittbild zeigt eine linke und eine rechte Seite der Crashstruktur 100, die bezüglich einer durch eine Strichlinie gekennzeichneten Längsachse der Crashstruktur 100 spiegelbildlich zueinander angeordnet sind. Fig. 1A zeigt die Crashstruktur 100 in einer Ruhestellung, in der die hohe Steifigkeit eingestellt ist. Gezeigt ist ein Gehäuse 105, das sich aus einer ersten Gehäusehälfte 110 und einer zweiten Gehäusehälfte 115 zusammensetzt, und ein Deformationselement 120, das hier in Form eines Rohres ausgebildet ist und dessen Endbereich in das Gehäuse 105 aufgenommen ist. In dem Gehäuse 105 sind eine Primärmatrize bzw. feste Matrize 125, eine Ausrückmatrize bzw. brechbare Matrize 130, ein durch eine Feder in Position gehaltener Ring 135 sowie ein pyrotechnischer Aktuator 140 angeordnet. Der pyrotechnische Aktuator 140 ist in Form von zwei diametral angeordneten Zündpillen ausgeführt. Die Zündpillen sind mithilfe einer Halterung 145 dem Ring 135 gegenüberliegend angeordnet. Die zweite Gehäusehälfte 115 weist zwei Austrittsöffnungen 150 auf. Ein Pfeil kennzeichnet eine Vorschubrichtung 155, in der im Falle einer Kollision das Deformationselement 120 in das Gehäuse 105 hineingeschoben und dabei verformt wird. In der in Fig. 1A gezeigte Grundstellung der adaptiven Crashstruktur 100 wird bei einer Kollision das Rohr 120 in die feste Matrize 125 und in die brechbare Matrize 130 geschoben und dabei stark verjüngt.

Fig. 1B zeigt in einem weiteren Längsschnitt den Ausschnitt aus der adaptiven Crashstruktur 100 aus Fig. 1A in aktuierter Stellung durch Zündung des pyrotechnischen Aktuators 140. Bei einer Aktuierung der Crashstruktur 100 - in der Darstellung in Fig. 1B durch eine skizzierte Explosion 160 der Zündpillen gekennzeichnet -wird der Ring 135 in Richtung der Vorschubrichtung 155 verschoben. Kommt es nun zu einer Kollision, dringt das Rohr 120 ebenfalls in die feste Matrize 125 und in die brechbare Matrize 130 ein. Da der Ring 135 die brechbare Matrize 130 nicht abstützt, kann diese infolge einer Aufprägung einer Radialkraft durch das Rohr 120 an Sollbruchstellen brechen und ausrücken. Der Verjüngungsgrad des Rohrs 120 ist somit verglichen mit der in Fig. 1A gezeigten Grundeinstellung geringer. Anstelle der Halterung 145 der Zündpillen können auch andere Halterungsmöglichkeiten, z. B. Befestigungen im bzw. am Gehäuse, verwendet werden.

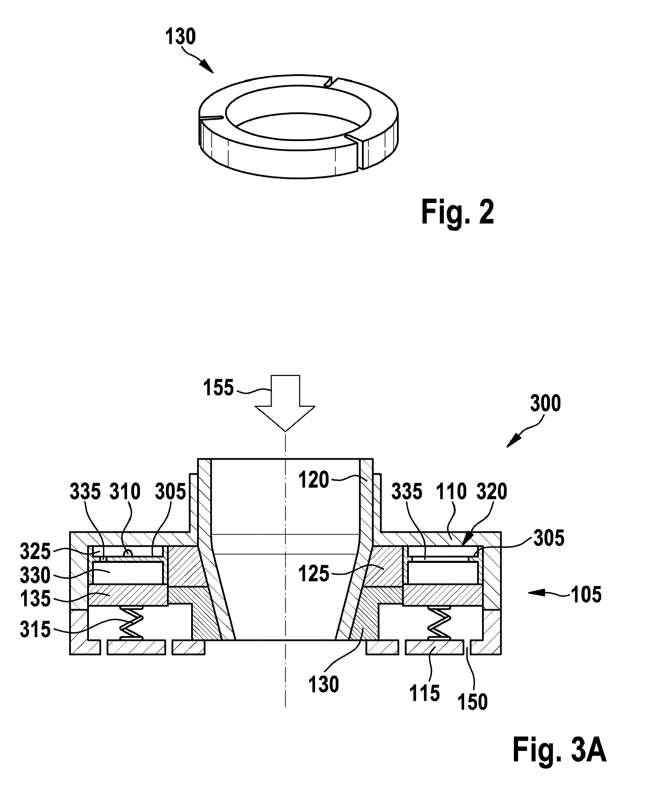

Fig. 2 zeigt eine perspektivische Darstellung der als Ring ausgebildeten ausrückbaren Matrize 130 der adaptiven Crashstruktur aus Figuren 1A und 1B. Die Ausrückmatrize 130 weist drei Sollbruchstellen auf, die die Ausrückmatrize 130 in drei gleich große Segmente unterteilen. Wird die auf die ausrückbare Matrize 130 wirkende abstützende Kraft entfernt, indem die Abstützeinrichtung aus der ersten in die zweite Position bewegt wird, so kann die ausrückbare Matrize 130 entlang der Sollbruchstellen brechen. Die einzelnen Segmente der ausrückbaren Matrize 130 können anschließend radial nach außen verschoben werden, wodurch sich der Innendurchmesser der ausrückbaren Matrize 130 vergrößert.

Fig. 3A zeigt in einer Längsschnittdarstellung einen Ausschnitt eines Ausführungsbeispiels einer hierin vorgestellten Vorrichtung 300 mit einstellbarer Steifigkeit zum Aufnehmen einer Aufprallenergie. Der in Fig. 3A gezeigte Grundaufbau der adaptiven Crashstruktur 300 mit vereinfachtem pyrotechnischen Aktuator entspricht dem Aufbau der anhand der Figuren 1A und 1B erläuterten Aufprallstruktur mit dem Unterschied, dass anstelle der Halterung für die Zündpillen eine Druckverteilungsstruktur in Form einer Blende 305 eingesetzt wird. Wesentlich unterscheidet sich die hier gezeigte Vorrichtung 300 von der in den Figuren 1A und 1B gezeigten Vorrichtung darin, dass hier ein pyrotechnischer Aktuator mit lediglich einer einzigen Zündpille zum Einsatz kommt. Der pyrotechnische Aktuator mit Zündpille bildet hier eine Druckerzeugungseinrichtung 310 zum Erzeugen einer Druckwelle. Es sind auch andere Formen von Druckerzeugungseinrichtungen 310 realisierbar, jedoch hierin nicht gezeigt. In der Darstellung in Fig. 3A ist die Druckerzeugungseinrichtung 310 nicht aktuiert. Die Abstützeinrichtung bzw. der Ring 135 wird mittels einer von einem Federelement 315 ausgeübten Federkraft in einer ersten Position gehalten, in der sie die ausrückbare Matrize 130 gegenüber einer Radialkraft des bei einer Kollision in das Gehäuse 105 einfahrenden Deformationselements 120 abstützt. Somit befindet sich die Vorrichtung bzw. adaptive Crashstruktur 300 gemäß der Darstellung in Fig. 3A im Ruhezustand bzw. in einer Grundeinstellung, in der die hohe Steifigkeit eingestellt ist. Wie die Darstellung in Fig. 3A zeigt, sind der pyrotechnische Aktuator 310 mit der Zündpille und die Blende 305 in einem gasdicht geschlossenen Druckraum 320 angeordnet, der von der ersten Gehäusehälfte 110, der nicht ausrückbaren Matrize 125 und der Abstützeinrichtung 135 beschränkt wird.

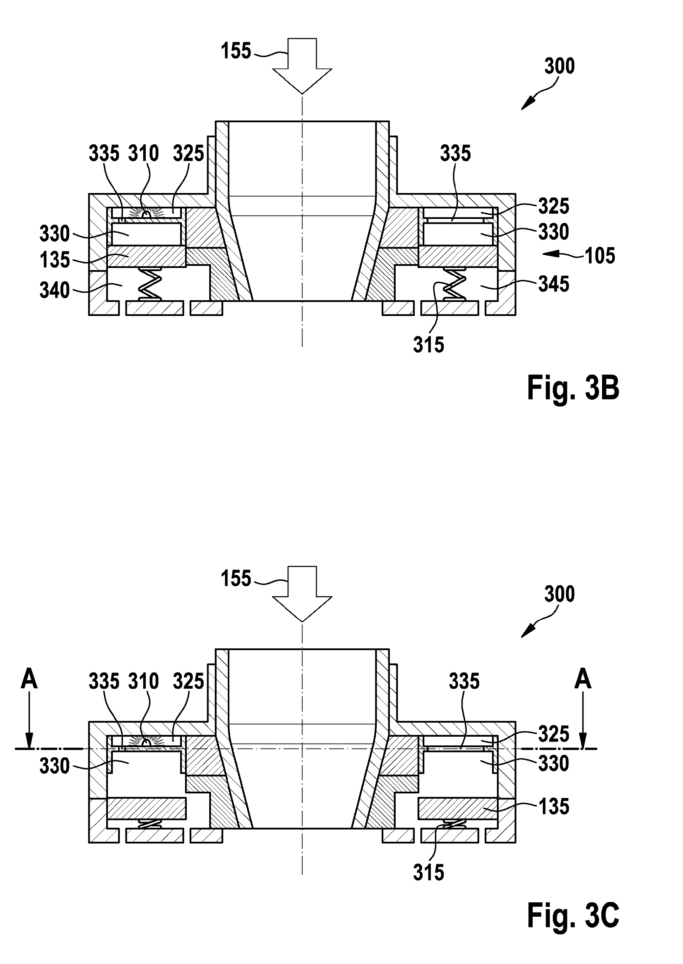

Die Darstellung in Fig. 3A zeigt, dass die Blende 305 parallel zu der Abstützeinrichtung 135 angeordnet ist und den Druckraum 320 in eine erste Druckkammer 325 und eine zweite Druckkammer 330 unterteilt. Der pyrotechnische Aktuator 310 ist in der ersten Druckkammer 325 angeordnet. Bei dem hier gezeigten Ausführungsbeispiel der Vorrichtung 300 weist die Blende 305 zwei Öffnungen 335 auf, über die die erste Druckkammer 325 und die zweite Druckkammer 330 miteinander fluidisch verbunden sind. Die Öffnungen 335 weisen ein unterschiedliches lichtes Maß auf, wobei der pyrotechnische Aktuator 310 in der Nähe der kleineren Öffnung 335 angeordnet ist. Mithilfe der Druckverteilungsstruktur, die hier in Form der Blende 305 mit unterschiedlich großen Öffnungen vorliegt, kann ansprechend auf eine Aktuierung der Druckerzeugungseinrichtung 310 der Ring 135 homogen wegbewegt werden, obwohl eine außermittig wirkende Kraft anliegt. Diese außermittig wirkende Kraft wird hier durch die Zündung der Zündpille des pyrotechnischen Aktuators 310 erreicht. So kann mittels konstruktiver Maßnahmen die Kraft, die aus der Explosion entsteht, homogen auf den Ring 135 wirken. Anhand der nachfolgenden Figuren 3B und 3C wird dieses Prinzip anschaulich erläutert.

Fig. 3B zeigt in einer weiteren Längsschnittdarstellung den Ausschnitt der Vorrichtung 300 mit einstellbarer Steifigkeit aus Fig. 3A bei Zündung des pyrotechnischen Aktuators 310. Die Darstellung in Fig. 3B illustriert, dass mit einer Erkennung eines Crashs, bei dem die Steifigkeit der Vorrichtung 300 herabgesetzt werden soll, wird die Zündpille des pyrotechnischen Aktuators 310 gezündet wird, z. B. durch ein Zündsignal eines mit der Vorrichtung 300 gekoppelten Steuergeräts. Der Ring 135 wird von einer aufkommenden Druckwelle weggeschossen, wie es in der folgenden Darstellung in Fig. 3C illustriert ist. Die bei dem in Figuren 3A und 3B gezeigten Ausführungsbeispiel implementierten Austrittsöffnungen 150 sind vorgesehen, damit sich auf der gegenüberliegenden Seite des Rings 135 kein Gegendruck aufbaut. Dies könnte nämlich die Dynamik des Rings 135 negativ beeinflussen und somit eine Fehlfunktion der adaptiven Crashstruktur 300 bewirken. Die Zündpille ist innerhalb des Gehäuses 105 so platziert, dass der Ring 135 bei einer Explosion der Zündpille gegen das Federelement 315 bewegt wird. In dem Moment, wo sich der Ring 135 am unteren Ende des Gehäuses 105 befindet, ist die ausrückbare Matrize 135 nicht mehr am Umfang unterstützt. Die adaptive Crashstruktur hat auf die weiche Stellung umgeschaltet, wie die Darstellung in der nachfolgenden Fig. 3C veranschaulicht.

Je kürzer ein Weg ist, den die Druckwelle zwischen der Zündpille und verschiedenen Positionen auf einer Oberfläche der Abstützeinrichtung zurücklegt, desto größer ist der Druck bzw. die Druckwelle bei der Explosion. Gemäß dem hier vorgestellten Konzept wird die Druckwelle im Nahbereich der Zündpille gedrosselt, ohne dies im entfernten Bereich der Zündpille zu tun. Entsprechend ist es die Aufgabe der Blende bzw. Drossel 305, dafür zu sorgen, dass sich im Nahbereich die durch die Explosion verursachte Druckwelle nur schwer von der ersten Druckkammer 325 zu der zweiten Druckkammer 330 ausbreiten kann. Gleichzeitig muss am anderen Ende des Aktuators 310 - also in der diametral entgegengesetzten Region - die ohnehin schon in der Intensität geringere Druckwelle möglichst verlustfrei von der ersten Druckkammer 325 zu der zweiten Druckkammer 330 übergehen. Dafür muss die Blende 305 dort eine möglichst große Öffnung 335 aufweisen.

Die Ausbreitung der Druckwelle und die unterschiedlichen Öffnungen 335 der Blende 305 können mit den folgenden Formeln vereinfacht dargestellt werden.
Grundsätzlich gilt: Kraft = Druck x Fläche, also F = P x S
Adaptiert man diese Gleichung auf das hier beschriebene Phänomen, lautet die Formel F_{Ringregion} = P_{Explosion} X S_{Blendenöffnung}

Eine homogene Ringbewegung ergibt sich, wenn die durch die Explosion abgeleitete Kraft in Wesentlichen auf jede Region des Rings 135 gleich ist. Bei dem in Fig. 3B gezeigten Ausführungsbeispiel der Vorrichtung 300 mit den zwei unterschiedlich großen Blendenöffnungen 335 wird eine erste Ringregion F_{Ringregion}_₁ gegenüber einer zweiten Ringregion F_{Ringregion_2} betrachtet. Voraussetzung ist, dass auf den Ring 135 wirkende Kräfte stets identisch sind, also F_{Ringregion_1} = F_{Ringregion_2}. Die erste Ringregion 1 bezieht sich auf eine dem Bezugszeichen 340 gekennzeichnete Fläche des Rings 135, die sich unter der kleineren Blendenöffnung 335 befindet. Analog dazu bezieht sich die zweite Ringregion 2 auf eine mit dem Bezugszeichen 345 gekennzeichnete Fläche des Rings 135, die sich unter der größeren Blendenöffnung 335 befindet. Fakt ist, dass P_{Explosion_1} > P_{Explosion_2}, weil die Explosion der Zündpille in unmittelbarer Nähe der kleineren Blendenöffnung 335 geschieht. Um F_{Ringregion}_₁ = F_{Ringregion_2} zu gewährleisten, ist also die Blende 305 so ausgelegt und konstruiert, dass S_{Blendenöffnung_1} < S_{Blendenöffnung_2}. Fig. 3C zeigt wiederum in einer Längsschnittdarstellung den Ausschnitt der Vorrichtung 300 mit einstellbarer Steifigkeit aus den Figuren 3A und 3B nach einer durch die Aktuierung des pyrotechnischen Aktuators 310 verursachten Bewegung der Abstützeinrichtung 135 in der Vorschubrichtung 155. Die Darstellung zeigt eine endgültige Lage bzw. zweite Position des Rings 135. Folgend auf die Zündung der Zündpille herrscht in der ersten Druckkammer 325 nicht überall der gleiche Druck. Je näher an der Zündpille, desto größer der Druck. In der zweiten Druckkammer 330 herrscht allerdings - aufgrund der unterschiedlichen Blendenöffnungen 335 - der gleiche Druck. Der Ring 135 kann also entgegen der Federkraft des Federelements 315 homogen wegbewegt werden und ohne Verkanten die in der Darstellung in Fig. 3C gezeigte zweite Position einnehmen.

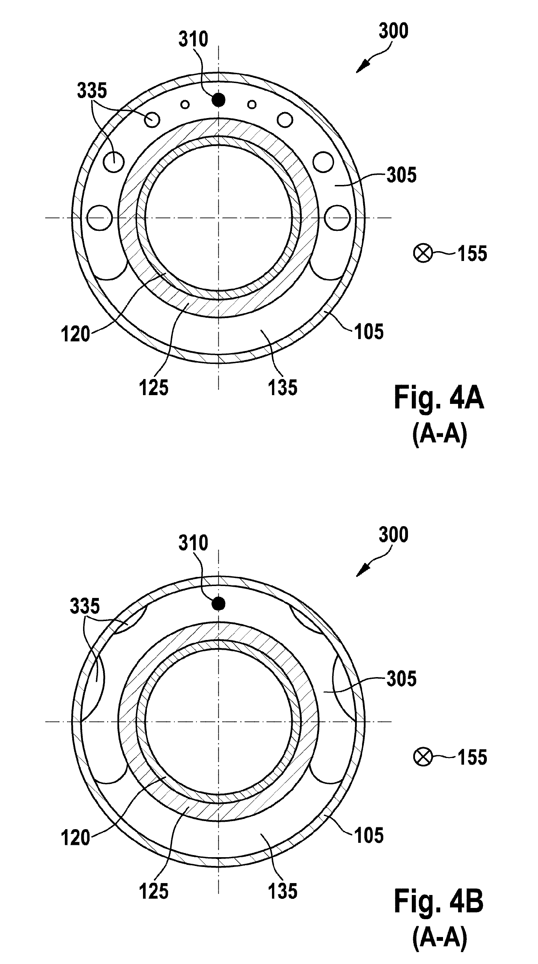

Selbstverständlich gibt es eine Vielzahl möglicher Auslegungen einer Geometrie der bei dem in den Figuren 3A bis 3C gezeigten Ausführungsbeispiel der Vorrichtung 300 mit einstellbarer Steifigkeit eingesetzten Blende 305. Anhand der nachfolgenden Figuren 4A bis 4C sind exemplarisch verschiedene realisierbare Blendengeometrien beschrieben. Diese Darstellungen zeigen unterschiedliche Ausführungsbeispiele der Blende 305 jeweils entlang einer in Fig. 3C gezeigten quer zum dargestellten Längsschnitt verlaufenden Schnittlinie A-A.

Fig. 4A zeigt die adaptive Crashstruktur 300 aus den Figuren 3A bis 3B im A-A-Schnitt mit einem ersten Ausführungsbeispiel der in der Vorrichtung aus den Figuren 3A bis 3C als Druckverteilungsstruktur eingesetzten Blende 305. Die Schnittdarstellung zeigt das innenliegende Deformationselement bzw. Rohr 120, die das Rohr 120 umgebende nicht-ausrückbare bzw. feste Matrize 125, eine Wand des Gehäuses 105, die an eine Innenseite der Gehäusewand angrenzende Abstützeinrichtung 135 sowie die die Abstützeinrichtung 135 teilweise überdeckende Blende 305. Ein Pfeilsymbol kennzeichnet eine Bewegungsrichtung der Abstützrichtung 135 in der Vorschubrichtung 155.

Aus der Illustration in Fig. 4A ist ersichtlich, dass die Blende 305 eine unvollständige Ringform ausbildet, sodass in der in der Zeichnung dargestellten Ansicht die Blende 305 lediglich etwa zwei Drittel der als Ring ausgeführten Abstützeinrichtung 135 abdeckt. Die Blende 305 ist dem Ring 135 in der Vorschubrichtung 155 vorgelagert angeordnet und weist eine im Wesentlichen identische Stärke wie der Ring 135 auf. Die Blende 305 weist eine Mehrzahl teils unterschiedlich großer Öffnungen 335 auf. Die Öffnungen 335 erstrecken sich über einen Gesamtbereich der Blende 305 und sind in Bezug auf den in der Zeichnung durch die Zündpille gekennzeichneten pyrotechnischen Aktuator 310 spiegelbildlich symmetrisch angeordnet. Aus der Darstellung in Fig. 4A ist ersichtlich, dass die Blendenöffnungen 335 kleiner sind, je näher sie zu der Zündpille angeordnet sind. Wie bereits erläutert ist auf der gegenüberliegenden Seite der Zündpille keine Blende mehr vorhanden bzw. die Blendenöffnung 335 ist hier maximal.

Fig. 4B zeigt wiederum die adaptive Crashstruktur 300 aus den Figuren 3A bis 3C im A-A-Schnitt. Das hier gezeigte Ausführungsbeispiel der Vorrichtung 300 ist weitgehend identisch mit dem anhand der Fig. 4A erläuterten mit dem Unterschied, dass die Blende 305 Unterschiede in der Ausführung aufweist. Hier sind die Öffnungen 335 durch Ausnehmungen in einem Randbereich der Blende 305 gebildet. Wie in der Darstellung in Fig. 4A vergrößern sich die Blendenöffnungen 335 mit der Distanz zur Zündpille.

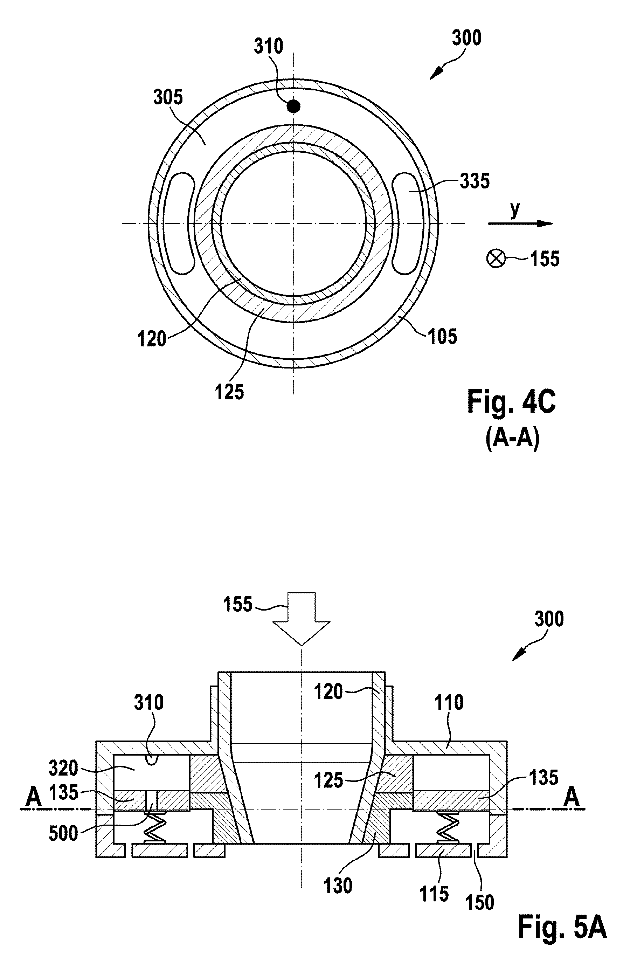

Fig. 4C zeigt ein weiteres Ausführungsbeispiel der Blende 305. Wiederum entspricht der Aufbau der im A-A-Schnitt gezeigten Vorrichtung 300 dem aus den Figuren 4A und 4B, wobei sich die Blendengeometrie unterscheidet. Die Darstellung in Fig. 4C zeigt, dass hier lediglich zwei Blendenöffnungen 335 eingesetzt werden, welche symmetrisch zur Zündpille angeordnet sind, d. h., die Entfernung zwischen Zündpille und Blendenöffnung 335 ist bei beiden Öffnungen 335 gleich. Dafür bildet die Blende 305 hier einen vollständigen Ring, der in der hier gezeigten Ansicht die Abstützeinrichtung in Form des Rings komplett überlagert. Eine vorteilhafte Ausprägung besteht ferner darin, die Blendenöffnungen 335 in Bezug auf die γ-Achse nicht ganz symmetrisch anzuordnen. Auch hiermit kann dem Umstand Rechnung getragen werden, dass die Druckwelle im Bereich der Zündpille stärker ist. Mit einem derartigen asymmetrischen Aufbau ist die Wahrscheinlichkeit einer homogenen Kraftentfaltung auf den Ring größer.

In den Figuren 4A bis 4C ist die Blende 305 als ein einziges Bauteil ausgebildet. Alternativ können ebenso mehrere Bauteile, also mehrere Teilblenden eingesetzt werden.

Im Folgenden wird eine weitere Möglichkeit zur Realisierung der Druckverteilung in der hierin vorgeschlagenen adaptiven Crashstruktur in Form einer oder mehrerer Druckauslassöffnungen vorgestellt. Dabei kann jeweils auf den Einsatz der Blende verzichtet werden.

Fig. 5A zeigt entsprechend ein Schnittbild eines Ausführungsbeispiels der adaptiven Crashstruktur 300 mit pyrotechnischem Aktuator 310 im Ruhezustand. Die hier gezeigte Vorrichtung 300 entspricht dem in den Figuren 3A bis 3C gezeigten Ausführungsbeispiel, mit dem Unterschied, dass als die Druckverteilungsstruktur hier anstelle einer Blende eine Druckauslassöffnung 500 zum Einsatz kommt. Die Druckauslassöffnung 500 liegt hier in Verbindung mit einer Lochmaske direkt an der Abstützeinrichtung bzw. an dem Ring 135 vor, und zwar in einer in der Vorschubrichtung 155 verlaufenden Durchgangsöffnung durch die Abstützeinrichtung 135. Auf eine zwischengeschaltete Blende kann verzichtet werden. Dies bedeutet gegenüber der anhand der Figuren 3A bis 3C erläuterten ersten Ausführung der Druckverteilungsstruktur eine Einsparung der Blende und damit zusätzlicher Kosten und Material sowie Arbeitsschritte.

Wie die Darstellung in Fig. 5A zeigt, wird dabei entgegen der in den Figuren 3A bis 3C gezeigten Ausführung der Ring 135 in einem Bereich um die Zündpille des pyrotechnischen Aktuators 310 konzentrisch mit der Druckauslassöffnung 500 versehen. Anstelle einer kann auch eine Mehrzahl von Druckauslassöffnungen 500 in diesem Bereich vorgesehen sein. Wie die Illustration zeigt, befindet sich lediglich in dem Bereich um die Zündpille eine Auslassöffnung 500 am Ring 135. Direkt gegenüber - also diametral entgegengesetzt - befindet sich keinerlei Auslassöffnung am Ring 135. Aufgabe der Druckauslassöffnung 500 ist es hier, die in dem Druckraum 320 auf den Ring 135 wirkende Druckverteilung konstant zu halten, sodass eine Bewegung des Rings 135 in der Vorschubrichtung 155 gleichmäßig verläuft.

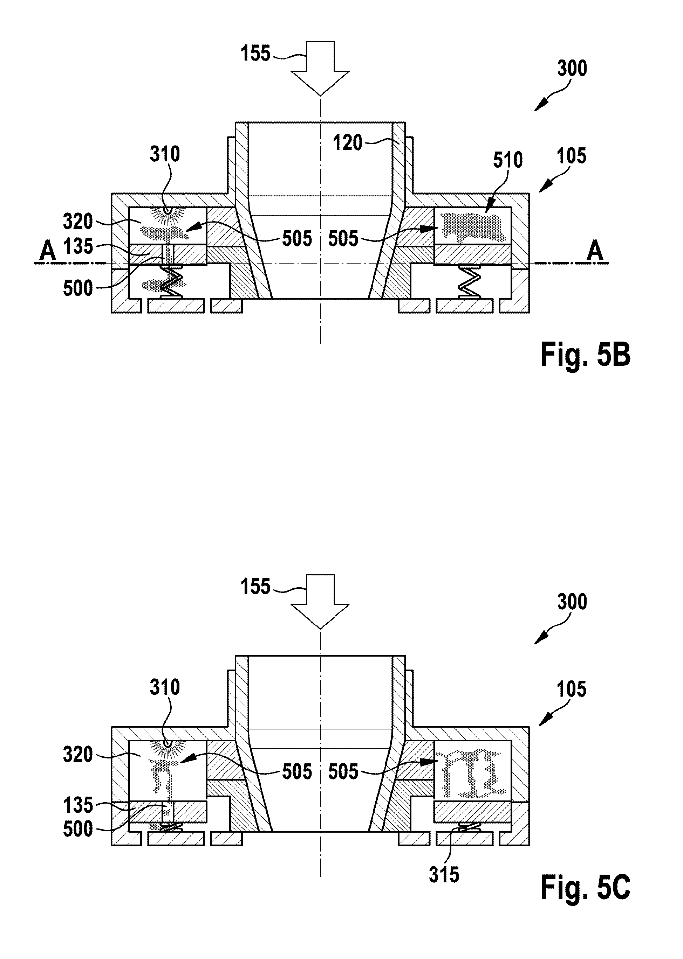

Fig. 5B zeigt in einem weiteren Schnittbild die adaptive Crashstruktur 300 aus Fig. 5A bei Zündung des pyrotechnischen Aktuators 310. Ein an den pyrotechnischen Aktuator 310 gesendetes Zündsignal führt zu einer Zündung und Explosion der Zündpille. Es folgt ein entsprechender Gasaustritt aus der Zündpille. Der Druckraum 320 ist durch das Gehäuse 105 und den Ring 135 begrenzt. Die Darstellung in Fig. 5B zeigt eine Gasentwicklung 505 des aus der Zündpille austretenden und die Druckwelle bildenden Gases. Durch die im Bereich der Zündpille in der Abstützeinrichtung 135 angeordnete Druckauslassöffnung 500 kann das Gas nach unten entweichen; folglich ist hier der Druck auf den Ring 135 etwas geringer. Im Gegenzug hierzu herrscht auf der gegenüberliegenden Seite ein maximaler Druck 510, der nach der Zündung dort verfügbar ist. Gemäß einer Auslegung des Rings 135 ist der Druck der Druckwelle so aufgeteilt, dass er innerhalb des Druckraums 320 konstant ist, sodass eine gleichmäßige Bewegung des Rings 135 stattfinden kann. Diese wird anhand der nachfolgenden Fig. 5C erläutert.

Fig. 5C zeigt in einem weiteren Schnittbild die adaptive Crashstruktur 300 aus Figuren 5A und 5B nach der Explosion der Zündpille und Expansion des aus der Zündpille austretenden Gases. Der Ring 135 befindet sich jetzt in der zweiten Position, in die er aufgrund der durch die Gasentwicklung 505 gebildeten Druckwelle in der Vorschubrichtung 155 entgegen einer Federkraft des Federelements bewegt wurde. Wie oben bereits beschrieben, ist die Ausführung des Rings 135 mit der Druckauslassöffnung 500 so ausgelegt, dass die Druckverteilung gleichmäßig ist und die Druckwelle den Ring 135 gleichmäßig in der Vorschubrichtung 155 nach unten bewegen kann.

Aufgrund dieser Tatsache ist bei einer alternativen Ausführung der Abstützeinrichtung 135 mit einer Mehrzahl von Druckauslassöffnungen 500 (in den Figuren nicht gezeigt) ein Radius einer Öffnung bzw. Bohrung 500 direkt unter der Zündpille am größten und ein Radius einer weitern Öffnung bzw. Bohrung 500 in einiger Entfernung entsprechend kleiner. Die Auslegung dieser weiteren Öffnung 500 kompensiert den zurücklegbaren Weg des Drucks und ist daher entsprechend kleiner.

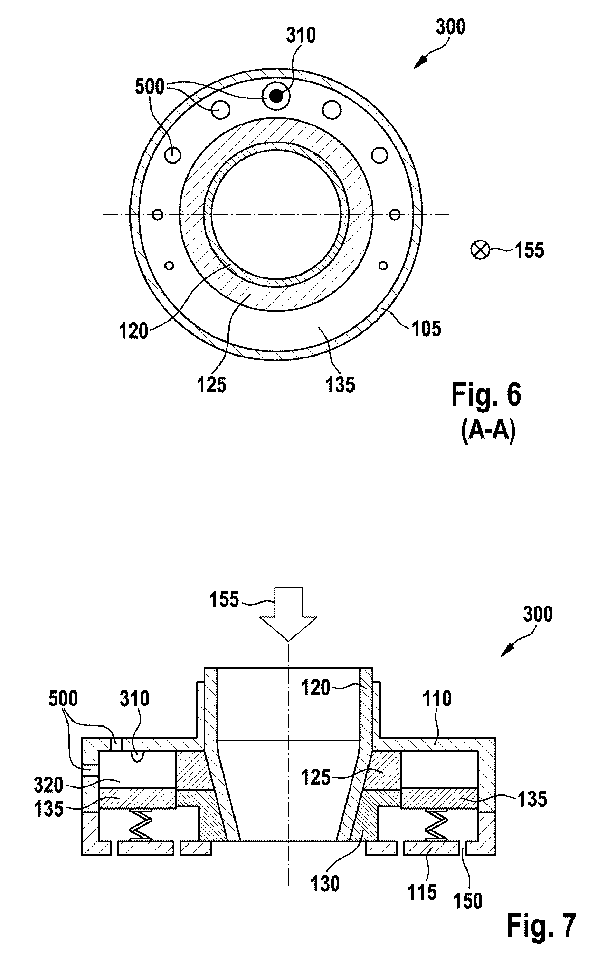

Fig. 6 zeigt einen Querschnitt durch ein Ausführungsbeispiel der Vorrichtung 300 aus den Figuren 5A bis 5C entlang einer Linie A-A in den Figuren 5A und 5B. Die Schnittdarstellung zeigt das innenliegende Deformationselement bzw. Rohr 120, die das Rohr 120 umgebende nicht-ausrückbare bzw. feste Matrize 125, eine Wand des Gehäuses 105 und die an eine Innenseite der Gehäusewand angrenzende Abstützeinrichtung bzw. den Ring 135. Ein Pfeilsymbol kennzeichnet eine Bewegungsrichtung der Abstützrichtung 135 in der Vorschubrichtung 155. Der Schnitt in Fig. 6 zeigt eine Ausführung der Vorrichtung 300, bei der auf eine Blende verzichtet wird, dafür aber der Ring 135 mit Öffnungen ausgestattet ist. Die Darstellung in Fig. 6 zeigt, dass bei dem hier gezeigten Ausführungsbeispiel der Ring 135 eine Mehrzahl teils unterschiedlich großer Druckauslassöffnungen 500 aufweist. Die Druckauslassöffnungen 500 erstrecken sich über etwa zwei Drittel einer Fläche des Rings 135 und sind in Bezug auf den in der Zeichnung durch die Zündpille gekennzeichneten pyrotechnischen Aktuator 310 spiegelbildlich symmetrisch angeordnet. Aus der Darstellung in Fig. 6 ist ersichtlich, dass ein Radius der Druckauslassöffnungen 500 mit wachsendem Abstand zu der Zündpille kleiner wird, um den Druck der Druckwelle auf den Ring 135 entsprechend zu erhöhen. Die direkt unterhalb der Zündpille angeordnete Druckauslassöffnung 500 weist den größten Radius auf, da hier der Druck am geringsten sein soll.

Fig. 7 zeigt ein weiteres mögliches Ausführungsbeispiel einer Realisierung der Druckverteilungsstruktur in der adaptiven Crashstruktur 300 ohne Einsatz einer Blende. Die Darstellung in Fig. 7 zeigt die Vorrichtung 300 mit pyrotechnischem Aktuator 310 wiederum im Ruhezustand. Hier sind im Unterschied zu dem in den Figuren 5A bis 5C gezeigten Ausführungsbeispiel die Druckauslassöffnungen 500 nicht in der Abstützeinrichtung 135, sondern in einer Wand der ersten Gehäusehälfte 110 nahe dem pyrotechnischen Aktuator 310 ausgebildet. Diese Ausführung bietet eine weitere Möglichkeit, den Druckaufbau in der Nähe der Zündpille zu drosseln. Die Darstellung in Fig. 7 zeigt zwei gleich große Druckauslassöffnungen 500, wobei die erste Druckauslassöffnung 500 seitlich, also radial bezüglich einer durch eine senkrechte Strichlinie in der Zeichnung gekennzeichnete Rohrachse in der Gehäusewand angeordnet ist, und die zweite Druckauslassöffnung 500 in Längsrichtung, also parallel zu der Rohrachse in der Gehäusewand angeordnet ist. Zur Absicherung gegenüber äußeren Einflüssen weist die erste Gehäusehälfte 110 eine (in der Darstellung nicht gezeigte) Membran auf, die über die jeweiligen Gehäuselöcher 500 montiert ist.

Bei dem in Fig. 7 dargestellten Ausführungsbeispiel der Vorrichtung 300 sind ferner in der zweiten Gehäusehälfte 115 Austrittsöffnungen 150 vorgesehen, um zu verhindern, dass sich auf der dem Druckraum 320 gegenüberliegenden Seite des Rings 135 ein Gegendruck aufbaut. Mit Ausschaltung des Gegendrucks wird die Dynamik des Rings 135 nicht negativ beeinflusst und somit eine Fehlfunktion der adaptiven Crashstruktur 300 wirksam vermieden. Es ist hierbei baulich dafür gesorgt, dass kein Wasser durch die Austrittsöffnungen 500 in das Innenleben der Vorrichtung 300 gelingen kann. So wird ein Korrodieren von Flächen, was die Funktionsweise der Crashstruktur 300 einschränken könnte, vermieden.

In Bezug auf eine Rückstellung der Abstützeinrichtung 135 nach erfolgter Aktuierung der Druckerzeugungseinrichtung 310 der hierin vorgestellten adaptiven Crashstruktur 300 kann prinzipiell zwischen zwei Möglichkeiten gewählt werden. Zum einen kann die Crashstruktur 300 so konstruiert sein, dass die Abstützeinrichtung bzw. der Ring 135 nach der Explosion der Zündpille wieder in Ursprungsposition bzw. erste Position zurückkommt; dafür muss zwischen Ring 135 und Gehäusewand eine Spielpassung herrschen, und es muss das in den obigen Figuren gezeigte Federelement 315 vorhanden sein. Eine derartige Ausführungsform ist dahin gehend vorteilhaft, dass der Ring 135 wieder in seiner Ursprungsposition zurückfahren kann, falls es z. B. zu einer Fehlauslösung kommen sollte. Beispielsweise könnte es vorkommen, dass der Aktuator 310 infolge eines sehr geringen Crashs, der eigentlich nicht detektiert werden sollte, die Crashstruktur 300 fälschlicherweise auf "weich" schaltet. Mit anschließend erfolgter Rückstellung des Rings 315 kann der Fahrer dann im sicheren (harten) Zustand eine Werkstatt anfahren, um den pyrotechnischen Aktuator 310 erneuern zu lassen. Bei einer derartigen Ausführungsform muss aber eine sichere Ringbewegung über die Fahrzeuglebensdauer gegeben sein, um ein Verkanten des Rings 135 bei der Rückstellung zu verhindern und eine Korrosionsgefahr auszuschalten.

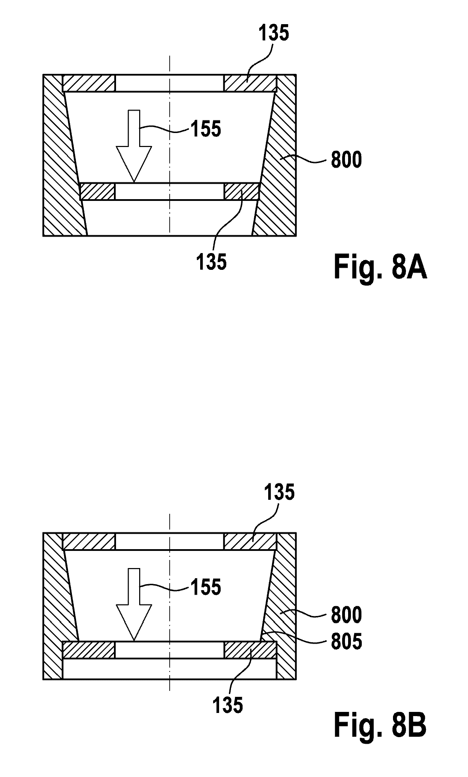

Die zweite Möglichkeit besteht darin, dass der Ring 135 nach erfolgter Bewegung in die zweite Position nicht wieder in die erste Position zurückkehrt. Vorteil hierbei ist, dass die Herstellungskosten geringer ausfallen, auf das Federelement verzichtet werden kann und Anforderungen an eine Passung zwischen Ring und Gehäusewand vernachlässigt werden können. Im Gegenteil kann mit einer Pressung des Rings 135 an die Gehäusewand eine bessere Abdichtung des Rings erzielt werden, ähnlich wie bei den Kolben in Motoren. Hier muss allerdings nach einer Fehlauslösung des Aktuators das Fahrzeug in einem weniger sicheren (weichen) Zustand der Crashstruktur 300 gefahren werden. Für eine beispielhafte Realisierung der zweiten hier vorgeschlagenen Möglichkeit der Ringbewegung, bei der das Zurückspringen des Rings 135 in die Ausgangslage nach dem Wegschießen zu verhindern ist, wird der Ring 135 durch eine Haltevorrichtung fixiert. Diese kann, wie anhand der nachfolgenden Figuren 8A und 8B erläutert, durch einen konischen Verlauf der Ringführung geschehen, und zusätzlich oder alternativ durch eine keilförmige Verengung, durch die der Ring 135 gedrückt wird, um ein Zurückkehren in die erste Position zu verhindern.

Fig. 8A zeigt entsprechend in einer vereinfachten Darstellung ein Schnittbild eines Ausführungsbeispiels einer Führung 800 zum Führen der ringförmigen Abstützeinrichtung 135 aus der ersten in die zweite Position und Fixieren der Abstützeinrichtung 135 in der zweiten Position. Bei dem in Fig. 8A gezeigten Ausführungsbeispiel der Führung 800 bildet eine Innenwand einen sich in der Vorschubrichtung 155 konisch verjüngenden Trichter. Ein Teil einer Wand der Führung 800 kann durch eine Wand des Gehäuses der hierin vorgestellten Crashstruktur gebildet werden. In der Darstellung in Fig. 8A oben ist der Ring 135 in der Ruhelage bzw. der ersten Position gezeigt, in der er eine Abstützfunktion für die brechbare Matrize der Crashstruktur erfüllt. In der Darstellung unten ist der Ring 135 nach einem Zünden des Aktuators gezeigt, in der der Ring 135 sich in der zweiten Position befindet, in der er die ausrückbare Matrize nicht mehr abstützt. Wie die Darstellung in Fig. 8A zeigt, ist der Ring 135 bei der Bewegung entlang den Innenwänden der Führung 800 gestaucht worden und ist nun in der zweiten Position fixiert.

Fig. 8B zeigt wiederum in einer vereinfachten Darstellung einen Schnitt durch ein weiteres Ausführungsbeispiel einer Führung 800 zum Führen der ringförmigen Abstützeinrichtung 135 aus der ersten in die zweite Position und Fixieren der Abstützeinrichtung 135 in der zweiten Position. Die in Fig. 8B dargestellte Führung 800 gleicht der in Fig. 8A dargestellten mit dem Unterschied, dass hier der trichterförmige Verlauf der Innenwand in eine Rastnase 805 mündet. Der Ring 135 wird bei der Bewegung von der ersten in die zweite Position über die Rastnase 805 hinaus gedrückt und von dieser an einer Bewegung zurück in die erste Position bzw. Ruhelage gehindert und somit in der zweiten Position fixiert.

Das anhand der vorangegangen Figuren erläuterte Aktuatorprinzip lässt sich auch auf andere Wirkprinzipien der Energieabsorption verwenden, wie z. B. das Aufweiten, das Umstülpen, das Falten, das Schneiden usw. Der Querschnitt des Rohres 120 wurde in den hier gezeigten Ausführungsformen der Crashstruktur 300 rund skizziert; es sind aber ebenso andere Querschnitte, z. B. rechteckig, viereckig, oval, usw., möglich.

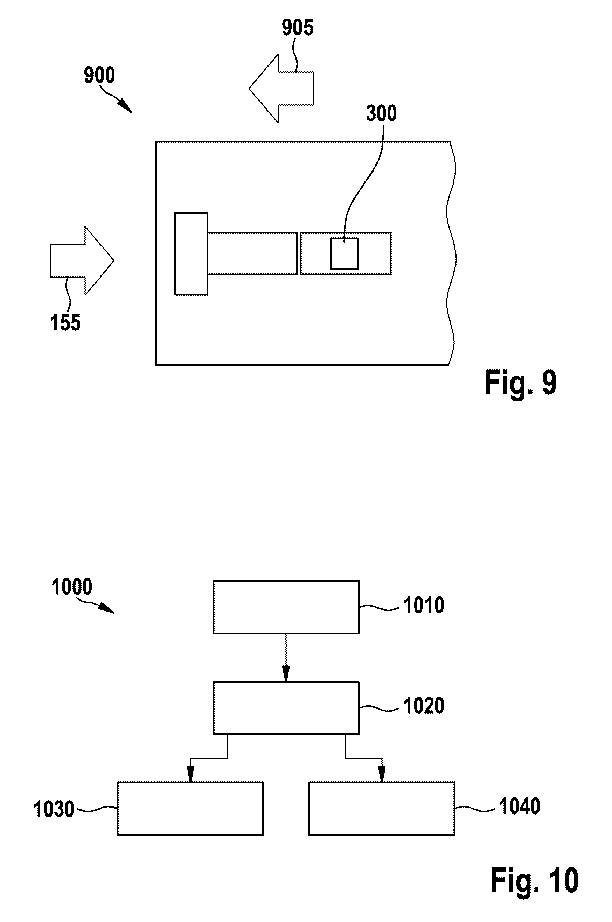

Fig. 9 zeigt eine Prinzipdarstellung eines Fahrzeugs 900 mit einer adaptiven Crashstruktur 300 gemäß einem Ausführungsbeispiel der vorliegenden Erfindung. Gezeigt ist eine Fahrzeugfrontstruktur, die einen Querträger und daran anschließend einen vorderen und einen hinteren Längsträger umfasst. Die Vorrichtung 300 ist in den hinteren Längsträger integriert. Da dieser Teil des Fahrzeugs 900 bei schweren Crashs relativ spät nach Kollisionsbeginn - ca. nach 40ms - deformiert wird und beispielsweise die Airbags bereits gezündet wurden, ist eine wie hier beschriebene irreversible Steifigkeitsanpassung keinesfalls kritisch. Auch eine Integration in den vorderen Längsträger ist möglich. Ferner kann die Crashstruktur 300 zusätzlich oder alternativ in einem Heck des Fahrzeugs 900 implementiert sein. Ein Pfeil kennzeichnet eine Fahrtrichtung 905 des Fahrzeugs 900. Ein weiterer Pfeil kennzeichnet die Vorschubrichtung 155, in der bei einer Kollision des Fahrzeugs 900, hier bei einem Frontalaufprall, die Aufprallenergie zu absorbieren ist, und in der dementsprechend ein in Fig. 9 nicht gezeigtes Deformationselement der Vorrichtung 300 bewegt wird, um durch Deformation die Aufprallenergie zu absorbieren.

Eine gemäß dem hier vorgestellten Ansatz hergestellte adaptive Crashstruktur ist an der Fahrzeugkarosserie befestigt.

Fig. 10 zeigt ein Ausführungsbeispiel eines Ablaufdiagramms eines Verfahrens 1000 zum Einstellen einer Steifigkeit einer adaptiven Crashstruktur, wie sie beispielsweise anhand der in den vorangegangen Figuren gezeigten Ausführungsbeispiele beschrieben ist.

In einem ersten Schritt 1010 wird ein Signal mit einer Information über eine Aufprallenergie empfangen, beispielsweise in Form eines Aufprallschweresignals, das z.B. von einem Beschleunigungssensor eines Fahrzeugs, in den die oben genannte Vorrichtung installiert ist, bereitgestellt wird. In einem nachfolgenden Schritt 1020 wird z.B. mittels eines geeigneten Algorithmus ein Wert des Aufprallschweresignals mit einem hinterlegten Schwellwert verglichen, um festzustellen, ob die ermittelte Aufprallschwere den Schwellwert unterschreitet oder nicht. Ergibt der Vergleich in Schritt 1020, dass die Aufprallschwere den Wert des Schwellwerts unterschreitet, fährt das Verfahren mit einem Schritt 1030 fort, in dem ein Aktivierungssignal an die Druckerzeugungseinrichtung zum Bewegen der Abstützeinrichtung aus der ersten Position in die zweite Position ausgegeben wird. Gemäß dem Aktivierungssignal wird der pyrotechnische Aktuator gezündet, um die Steifigkeit der Vorrichtung zu reduzieren. Ergibt hingegen der Vergleich in Schritt 1020, dass die ermittelte Aufprallschwere den Wert des Schwellwerts nicht unterschreitet, fährt das Verfahren mit einem Schritt 1040 fort, in dem das Bereitstellen des Aktivierungssignals an die Druckerzeugungseinrichtung unterdrückt wird. Entsprechend verbleibt eine Abstützeinrichtung in der ersten Position, und die Vorrichtung bleibt somit auf die hohe Steifigkeit eingestellt. Die Schritte 1010 und 1020 können gemäß einer Ausführungsform des Verfahrens 1000 in einem Steuergerät des Fahrzeugs durchgeführt werden. Entsprechend erfolgt der Schritt 1030 basierend auf einem Signal des Steuergeräts.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

## Patentansprüche

1. Vorrichtung (300) mit einstellbarer Steifigkeit zum Aufnehmen einer Aufprallenergie, wobei die Vorrichtung ein Gehäuse (105) mit einer in dem Gehäuse angeordneten ausrückbaren Matrize (130) zum Aufnehmen und Deformieren eines Deformationselements (120) bei einer Bewegung des Deformationselements in einer durch die Aufprallenergie bedingten Vorschubrichtung (155) aufweist, wobei die Vorrichtung
eine in dem Gehäuse angeordnete Abstützeinrichtung (135), die ausgebildet ist, um in einer ersten Position die ausrückbare Matrize gegenüber einer in einer Querrichtung zu der Vorschubrichtung wirkenden Radialkraft des Deformationselements abzustützen und in einer zweiten Position die ausrückbare Matrize für eine Bewegung zum Ausrücken durch die Radialkraft freizugeben aufweist, **gekennzeichnet durch**
einen in dem Gehäuse der Abstützeinrichtung in der Vorschubrichtung vorgelagert angeordneten Druckraum (320) mit einer Druckverteilungsstruktur, die ausgebildet ist, um eine von einer Druckerzeugungseinrichtung (310) erzeugte Druckwelle in dem Druckraum zu leiten, um die Steifigkeit einzustellen.

2. Vorrichtung (300) gemäß Anspruch 1, **dadurch gekennzeichnet, dass** die Abstützeinrichtung (135) als ein Ring ausgebildet ist, dessen Öffnungsdurchmesser größer als ein Außenumfang der ausrückbaren Matrize (130) ist.

3. Vorrichtung (300) gemäß einem der vorangegangenen Ansprüche, **dadurch gekennzeichnet, dass** die Druckerzeugungseinrichtung (310) als ein in dem Druckraum (320) angeordneter pyrotechnischer Aktuator ausgebildet ist, der eine Zündpille zum Erzeugen der Druckwelle aufweist.

4. Vorrichtung (300) gemäß einem der vorangegangenen Ansprüche, **dadurch gekennzeichnet, dass** die Druckverteilungsstruktur als eine den Druckraum (320) in eine in der Vorschubrichtung (155) erste Druckkammer (325) und eine in der Vorschubrichtung zweite Druckkammer (330) unterteilende Blende (305) ausgebildet ist, die mindestens eine Öffnung (335) zum vorbestimmten Führen der Druckwelle aus der ersten Druckkammer in die zweite Druckkammer aufweist.

5. Vorrichtung (300) gemäß einem der vorangegangenen Ansprüche, **dadurch gekennzeichnet, dass** die Druckverteilungsstruktur als mindestens eine mit dem Druckraum (320) verbundene Druckauslassöffnung (500) zum teilweisen Ableiten der Druckwelle aus dem Druckraum ausgebildet ist.

6. Vorrichtung (300) gemäß Anspruch 5, **dadurch gekennzeichnet, dass** die Druckauslassöffnung (500) in der Abstützeinrichtung (135) angeordnet und ausgebildet ist, um das teilweise Ableiten der Druckwelle aus dem Druckraum (320) in einen der Abstützeinrichtung in der Vorschubrichtung (155) nachgeordneten Bereich der Vorrichtung zu bewirken.

7. Vorrichtung (300) gemäß Anspruch 5, **dadurch gekennzeichnet, dass** die Druckauslassöffnung (500) in einer Wand des Gehäuses (105) angeordnet und ausgebildet ist, um das teilweise Ableiten der Druckwelle aus dem Druckraum (320) in einen außerhalb der Vorrichtung gelegenen Außenbereich zu bewirken.

8. Vorrichtung (300) gemäß einem der vorangegangenen Ansprüche, **dadurch gekennzeichnet, dass** eine der Abstützeinrichtung (135) in der Vorschubrichtung (155) nachgelagerte weitere Wand des Gehäuses (105) zumindest eine Austrittsöffnung (150) aufweist.

9. Vorrichtung (300) gemäß einem der vorangegangenen Ansprüche, **dadurch gekennzeichnet, dass** die Vorrichtung eine Führung (800) zum Führen der Abstützeinrichtung (135) zwischen der ersten Position und der zweiten Position und Fixieren der Abstützeinrichtung in der zweiten Position aufweist, wobei die Führung durch ein sich zwischen der ersten Position und der zweiten Position verringerndes lichtes Maß gekennzeichnet ist.

10. Vorrichtung (300) gemäß einem der vorangegangenen Ansprüche, **dadurch gekennzeichnet, dass** die Vorrichtung ferner eine nicht ausrückbare Matrize (125) zum Aufnehmen und Deformieren des Deformationselements (120) aufweist, wobei die nicht ausrückbare Matrize der ausrückbaren Matrize (130) in der Vorschubrichtung (155) vorgelagert in dem Gehäuse (105) angeordnet ist.

11. Verfahren (1000) zum Einstellen einer Steifigkeit einer Vorrichtung (300) gemäß einem der Ansprüche 1 bis 11, wobei das Verfahren die folgenden Schritte aufweist:
Empfangen (1010) eines Signals mit einer Information über die Aufprallenergie;
Vergleichen (1020) eines Wertes des Signals mit einem Schwellwert; und
Bereitstellen (1030) eines Aktivierungssignals an die Druckerzeugungseinrichtung (310) zum Bewegen der Abstützeinrichtung (135) aus der ersten Position in die zweite Position, um die Steifigkeit einzustellen, wenn der Schritt des Vergleichens als Ergebnis liefert, dass der Wert ein vorbestimmtes Verhältnis zu dem Schwellwert aufweist.

12. Computer-Programmprodukt mit Programmcode zur Durchführung eines Verfahrens (1000) nach Anspruch 11, wenn das Programm auf einem Informationssystem ausgeführt wird.

## Claims

1. Device (300) with adjustable rigidity for absorbing impact energy, wherein the device has a housing (105) with a displaceable die (130) which is arranged in the housing and has the purpose of receiving and deforming a deformation element (120) when the deformation element moves in an advancing direction (155) which is conditioned by the impact energy, wherein the device
has a supporting device (135) which is arranged in the housing, in order to support, in a first position, the displaceable die with respect to a radial force of the deformation element which acts in a transverse direction with respect to the advancing direction, and in order, in a second position, to release the displaceable die for a displacement movement as a result of the radial force, **characterized by**
a pressure space (320) which is arranged in the housing mounted in front of the supporting device in the advancing direction and has a pressure distribution structure which is designed to conduct a pressure wave generated by a pressure-generating device (310) in the pressure space, in order to adjust the rigidity.

2. Device (300) according to Claim 1, **characterized in that** the supporting device (135) is embodied as a ring whose opening diameter is larger than an external circumference of the displaceable die (130).

3. Device (300) according to one of the preceding claims, **characterized in that** the pressure-generating device (310) is embodied as a pyrotechnic actuator which is arranged in the pressure space (320) and which has a firing cap for generating the pressure wave.

4. Device (300) according to one of the preceding claims, **characterized in that** the pressure distribution structure is embodied as a diaphragm (305) which divides the pressure space (320) into a first pressure chamber (325) in the advancing direction (155) and a second pressure chamber (330) in the advancing direction and which has at least one opening (335) for the predetermined guidance of the pressure wave out of the first pressure chamber into the second pressure chamber.

5. Device (300) according to one of the preceding claims, **characterized in that** the pressure distribution structure is embodied as at least one pressure outlet opening (500), connected to the pressure space (320), for partially diverting the pressure wave out of the pressure space.

6. Device (300) according to Claim 5, **characterized in that** the pressure outlet opening (500) is arranged in the supporting device (135) and is designed to bring about the partial diversion of the pressure wave out of the pressure space (320) into an area of the device arranged downstream of the supporting device in the advancing direction (155).

7. Device (300) according to Claim 5, **characterized in that** the pressure outlet opening (500) is arranged in a wall of the housing (105) and is designed to bring about the partial diversion of the pressure wave out of the pressure space (320) into an outer area located outside the device.

8. Device (300) according to one of the preceding claims, **characterized in that** a further wall of the housing (105) which is positioned downstream of the supporting device (135) in the advancing direction (155) has at least one outlet opening (150).

9. Device (300) according to one of the preceding claims, **characterized in that** the device has a guide means (800) for guiding the supporting device (135) between the first position and the second position and securing the supporting device in the second position, wherein the guidance is **characterized by** a clear dimension which decreases between the first position and the second position.

10. Device (300) according to one of the preceding claims, **characterized in that** the device also has a non-displaceable die (125) for absorbing and deforming the deformation element (120), wherein the non-displaceable die is arranged in front of the displaceable die (130) in the advancing direction (155) in the housing (105).

11. Method (1000) for adjusting the rigidity of a device (300) according to one of Claims 1 to 11, wherein the method comprises the following steps:
receiving (1010) a signal with information about the impact energy;
comparing (1020) a value of the signal with a threshold value; and
making available (1030) an activation signal to the pressure-generating device (310) for moving the supporting device (135) out of the first position into the second position, in order to adjust the rigidity, when the comparison step supplies as a result the fact that the value is in a predetermined ratio to the threshold value.

12. Computer program product having program code for executing a method (1000) according to Claim 11, when the program is run on an information system.

## Revendications

1. Dispositif (300) à rigidité ajustable destiné à reprendre l'énergie d'une percussion,
le dispositif présentant un boîtier (105) doté d'une matrice débrayable (130) disposée dans le boîtier et reprenant et déformant un élément de déformation (120) lors d'un déplacement de l'élément de déformation dans la direction d'un avancement (155) provoqué par l'énergie de percussion,
le dispositif présentant un ensemble de soutien (135) disposé dans le boîtier et configuré pour, dans une première position, soutenir la matrice débrayable en opposition à une force radiale de l'élément de déformation qui agit dans une direction transversale par rapport à la direction d'avancement et, dans une deuxième position, libérer la matrice débrayable en vue d'un déplacement de débrayage par la force radiale, **caractérisé par**
un espace sous pression (320) disposé dans le boîtier de l'ensemble de soutien, en amont dans la direction d'avancement, et doté d'une structure de répartition de pression configurée pour conduire dans l'espace sous pression une onde de pression formée par un ensemble (310) de formation de pression, en vue d'ajuster la rigidité.

2. Dispositif (300) selon la revendication 1, **caractérisé en ce que** l'ensemble de soutien (135) est configuré comme anneau dont le diamètre de l'ouverture est supérieur à la périphérie extérieure de la matrice débrayable (130).

3. Dispositif (300) selon l'une des revendications précédentes, **caractérisé en ce que** l'ensemble (310) de formation de pression est configuré comme actionneur pyrotechnique disposé dans l'espace sous pression (320) et doté d'une pile d'allumage qui forme l'onde de pression.

4. Dispositif (300) selon l'une des revendications précédentes, **caractérisé en ce que** la structure de répartition de pression est configurée comme écran (305) qui divise l'espace sous pression (320) en une chambre sous pression (325) disposée en première position dans la direction d'avancement (155) et une chambre sous pression (330) disposée en deuxième position dans la direction d'avancement et qui présente au moins une ouverture (335) qui guide de façon prédéterminée l'onde de pression depuis la première chambre sous pression jusque dans la deuxième chambre sous pression.

5. Dispositif (300) selon l'une des revendications précédentes, **caractérisé en ce que** la structure de répartition de pression est configurée comme ouverture ou ouvertures (500) de délestage de pression reliées à la chambre sous pression (320) et qui évacuent en partie l'onde sous pression hors de la chambre sous pression.

6. Dispositif (300) selon la revendication 5, **caractérisé en ce que** l'ouverture (500) de délestage de pression est disposée dans l'ensemble de soutien (135) et est configurée pour entraîner une évacuation partielle de l'onde sous pression hors de la chambre sous pression (320) dans une partie du dispositif situé en aval de l'ensemble de soutien dans la direction d'avancement (155).

7. Dispositif (300) selon la revendication 5, **caractérisé en ce que** l'ouverture (500) de délestage de pression est disposée dans une paroi du boîtier (105) et est configurée pour entraîner une évacuation partielle de l'onde de pression hors de l'espace sous pression (320) dans une zone extérieure située à l'extérieur du dispositif.

8. Dispositif (300) selon l'une des revendications précédentes, **caractérisé en ce qu'**une autre paroi du boîtier (105), située en aval de l'ensemble de soutien (135) dans la direction d'avancement (155), présente au moins une ouverture de sortie (150).

9. Dispositif (300) selon l'une des revendications précédentes, **caractérisé en ce que** le dispositif présente un guide (800) qui guide l'ensemble de soutien (135) entre la première position et la deuxième position et qui fixe l'ensemble de soutien dans la deuxième position, le guide étant **caractérisé par** une petite dimension qui se rétrécit entre la première position et la deuxième position.

10. Dispositif (300) selon l'une des revendications précédentes, **caractérisé en ce que** le dispositif présente en outre une matrice (125) non débrayable qui reprend et déforme l'élément de déformation (120), la matrice non débrayable étant disposée dans le boîtier (105) en amont de la matrice débrayable (130) dans la direction d'avancement (155).

11. Procédé (1000) d'ajustement de la rigidité d'un dispositif (300) selon l'une des revendications 1 à 11, le procédé présentant les étapes suivantes :
réception (1010) d'un signal présentant une information concernant l'énergie de percussion,
comparaison (1020) d'une valeur du signal à une valeur de seuil et
fourniture (1030) d'un signal d'activation à l'ensemble (310) de formation de pression en vue de déplacer l'ensemble de soutien (135) depuis la première position jusque dans la deuxième position pour ajuster la rigidité si l'étape de comparaison donne comme résultat que la valeur présente un rapport prédéterminé par rapport à la valeur de seuil.

12. Produit de programme informatique doté de codes de programme permettant la mise en oeuvre d'un procédé (1000) selon la revendication 11 lorsque le programme est exécuté sur un système de traitement de l'information.
